# EUROPÄISCHE PATENTSCHRIFT

(11) **EP 1 473 468 B1**
(45) Veröffentlichungstag und Bekanntmachung des Hinweises auf die Patenterteilung: **25.04.2007**
(21) Anmeldenummer: 04006776.1
(22) Anmeldetag: 20.03.2004
(51) Int. Cl.: F16B 12/24, F16B 12/26

(54) **Steckverbindung**
Mounting element
Connecteur enfichable

(30) Priorität: 29.04.2003 DE 10319413
(43) Veröffentlichungstag der Anmeldung: 03.11.2004
(73) Patentinhaber: Schwinn GmbH, 64372 Ober-Ramstadt (DE)
(72) Erfinder: Rush, Gordon, 32657 Lemgo (DE); Schuck, Thomas, 64720 Michelstadt (DE)
(74) Vertreter: Habermann, Jan

(56) Entgegenhaltungen:
- DE-A- 2 106 639
- DE-A- 2 242 981
- DE-A- 19 950 746
- DE-U- 29 918 363
- US-B1- 6 406 235

## Beschreibung

Die Erfindung betrifft eine Steckverbindung zur Befestigung eines Möbelgriffs od. dgl. an einem Möbelteil, mit einem in einer Bohrung des Möbelteils aufnehmbaren Hohldübel, der an seiner Außenseite zum Eingriff an der Bohrungswand bestimmte Haltezähne sowie eine zentrische Durchgangsbohrung aufweist, in die ein mit dem Möbelgriff od. dgl. verbundener Steckzapfen einführbar und einrastbar ist, wobei der Hohldübel an seinem vorderen Ende Längsschlitze und einen nach innen vorspringenden Stützbund aufweist, der in montiertem Zustand der Steckverbindung in eine Umfangsnut des Steckzapfens einfedert und sich mit seiner stirnseitigen Stützfläche formschlüssig an einer rückwärtigen ringförmigen Widerlagerfläche eines das freie Ende des Steckzapfens bildenden Zapfenkopfes abstützt.

Derartige Steckverbindungen dienen dazu, Möbelgriffe oder ähnliche Teile beispielsweise an Frontplatten von Schubladen oder Möbeltüren zu befestigen. Bei der bisher üblichen Befestigungsart waren die Möbelgriffe mit Gewindezapfen versehen, die durch Durchgangsbohrungen der Frontplatte oder Möbeltür gesteckt und an der Rückseite mittels einer Mutter angeschraubt wurden. Stattdessen war es auch üblich, jeweils eine Schraube von der Rückseite durch die Durchgangsbohrung zu stecken und in eine Gewindebohrung des Möbelgriffs einzuschrauben. Diese Art der Befestigung ist verhältnismäßig arbeits- und kostenintensiv.

Daher besteht der Wunsch, Möbelgriffe und ähnliche Bauteile in Sacklochbohrungen zu befestigen, die an der Rückseite nicht austreten. Bei einer bekannten (DE 199 23 107 C1) wird in die Bohrung, die als Sacklochbohrung ausgeführt sein kann, ein aus Kunststoff bestehender Hohldübel eingesetzt, der über den größten Teil seiner Länge mehrfach geschlitzt ist und einen Spreizdübel bildet. Zu diesem Zweck weist die Durchgangsbohrung des Hohldübels eine radiale Verengung auf. Der Steckzapfen ist im wesentlichen zylindrisch. Sein Durchmesser ist größer als der Durchmesser der radialen Verengung. Wenn der Steckzapfen in den Hohldübel eingesteckt wird, spreizt er daher den Hohldübel, so dass die an der Außenseite angebrachten Haltezähne in die Bohrungswand eingreifen. Am Ende der Einsteckbewegung rastet ein nahe dem griffseitigen Ende des Steckzapfens angeordneter, radial vorspringender Bund in einer hieran angepassten Nut der Durchgangsbohrung ein.

Beim Einstecken des Steckzapfens muss eine erhebliche Einsteckkraft aufgebracht werden, um zunächst den Hohldübel zu spreizen und schließlich den Bund in die Nut einrasten zu lassen. Die Auszugskraft, mit der der Möbelgriff gegen ein Lösen vom Möbelteil gesichert ist, ist jedoch geringer als die Einsteckkraft, weil die radiale Verengung des Hohldübels hierbei ausschließlich Reibungskräfte auf den Steckzapfen überträgt, während beim Einsteckvorgang zusätzlich zu solchen Reibungskräften noch die erforderliche Kraft für die Spreizung des Dübels aufgebracht werden muss.

Bei einer bekannten Steckverbindung der eingangs genannten Gattung (DE 199 50 746 Al) liegt die rückwärtige ringförmige Widerlagerfläche, an der sich die stirnseitige Stützfläche des Stützbundes abstützt, in einer Normalebene zur Mittelachse der Steckverbindung, d.h. sie bildet einen rechten Winkel mit der Mittelachse. Dies führt dazu, dass der Steckzapfen nach dem Einfedern des Stützbundes des Hohldübels in die Umfangsnut des Steckzapfens noch um eine gewisse Strecke zurückgezogen werden kann, bevor in axialer Richtung eine Spannung auf den Hohldübel aufgebaut wird.
Wegen der ebenen Gestaltung der Widerlagerfläche hat auch diese axiale Spannung keine unmittelbar spreizende Wirkung für den Hohlzapfen.

Aufgabe der Erfindung ist es daher, eine Steckverbindung der eingangs genannten Gattung so auszubilden, dass nach dem Einführen des Steckzapfens eine erhöhte Spreizwirkung und Haltekraft des Hohldübels erreicht wird.

Diese Aufgabe wird erfindungsgemäß dadurch gelöst, dass die Widerlagerfläche des Zapfenkopfes des Steckzapfens eine Mantelfläche eines sich zum Zapfenkopf hin erweiternden Kegelstumpfes mit einem Kegelwinkel von 90° - 170° bildet.

Der Hohldübel ist hierbei nicht als Spreizdübel, sondern als Einsteckdübel ausgeführt, der in die Bohrung des Möbelteils eingedrückt oder eingeschlagen wird. Dabei werden die Haltezähne an der Außenseite des Hohldübels elastisch verformt, so dass sie in einen hochbelastbaren Eingriff mit der Bohrungswand gebracht werden.

Die für die sichere Verankerung des Hohlzapfens im Möbelteil erforderliche Kraft wird hierbei beim Einsetzen des Hohldübels durch Einpressen oder Einschlagen und nicht beim Einstecken des Steckzapfens aufgebracht. Beim Einstecken des Steckzapfens ist es nur erforderlich, das geschlitzte innere Ende des Hohldübels so weit elastisch aufzuweiten, dass der Zapfenkopf hindurchtreten kann. In der Endstellung rastet der nach innen vorspringende Bund des Hohldübels derart in die Umfangsnut hinter dem Zapfenkopf ein, dass sich die stirnseitige Stützfläche des Hohldübels formschlüssig an der rückwärtigen ringförmigen Widerlagerfläche des Zapfenkopfes abstützt. Die Kegelstumfform der Widerlagefläche des Zapfenkopfs bewirkt schon beim Einfedern Des Stützbundes des Hohldübels eine vorgespannte Verbindung. Beim Aufbringen einer Zugkraft auf den Steckzapfen wird eine Spreizung des Hohldübels erreicht. Die Steckverbindung kann nur unter Überwindung des Formschlusses gelöst werden.

Die für die Montage des Möbelgriffs od. dgl. erforderliche Einsteckkraft ist daher verhältnismäßig gering, während ein unerwünschtes Herausziehen des Steckzapfens nur mit einer ganz erheblichen Kraft möglich wäre.

Vorteilhafte Ausgestaltungen des Erfindungsgedankens sind Gegenstand von Unteransprüchen.

Die Erfindung wird nachfolgend an einem Ausführungsbeispiel näher erläutert, das in der Zeichnung dargestellt ist.

Es zeigt:
Fig. 1 eine Steckverbindung mit einem Hohldübel und einem Steckzapfen im Längsschnitt,
Fig. 2 den Hohldübel und den Steckzapfen der Steckverbindung nach Fig. 1 in perspektivischer, auseinandergezogener Darstellung,
Fig. 3 den Hohldübel nach Fig. 1 im Längsschnitt vor der Montage und
Fig. 4 den Steckzapfen der Steckverbindung nach Fig. 1.

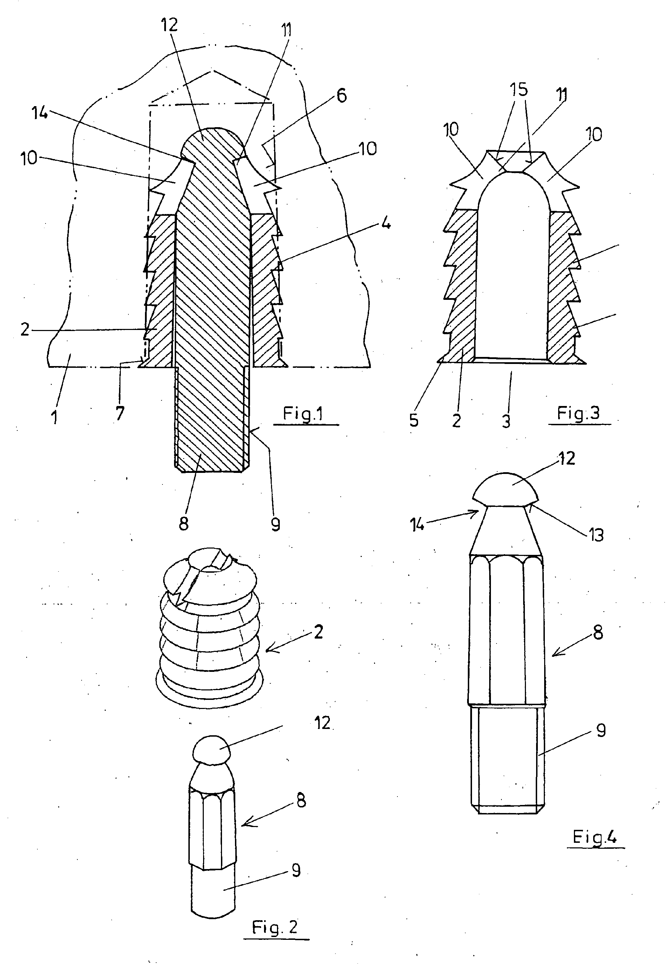

Die in der Zeichnung dargestellte Steckverbindung dient beispielsweise zur Befestigung eines Möbelgriffs (nicht dargestellt) an einem Möbelteil 1, beispielsweise einer Frontplatte einer Schublade.

Ein aus Kunststoff bestehender Hohldübel 2 weist eine zentrische Durchgangsbohrung 3 auf. An seiner Außenseite ist der Hohldübel 2 mit umlaufenden, im Querschnitt sägezahnförmigen Haltezähnen 4 versehen. An seinem griffseitigen, an der Möbelaußenfläche liegenden Ende weist der Hohldübel 2 einen nach außen vorspringenden Haltebund 5 auf. Der Hohldübel 2 wird in einer als Sacklochbohrung ausgeführte Bohrung 6 des Möbelteils 1 eingedrückt oder eingeschlagen. Der Außendurchmesser der Zähne 4 ist im Verhältnis zum Durchmesser der Bohrung 6 so gewählt, dass die Zähne 4 beim Einpressen oder Einschlagen des Hohldübels 2 verformt werden und dadurch in einen hochbelastbaren Eingriff mit der Bohrungswand treten. Der an einer Ansenkung 7 am Eingang der Bohrung 6 zur Anlage kommende Haltebund 5 begrenzt die Eindrückbewegung des Hohldübels 2 und stellt einen glatten Abschluss am Bohrungsende sicher.

Ein metallischer Steckzapfen 8 ist an seinem griffseitigen Ende mit einem Außengewinde 9 versehen, das in eine Gewindebohrung des anzubringenden (nicht dargestellten) Möbelgriffs eingeschraubt oder in anderer Weise mit definierter überstehender Länge daran befestigt ist.

Der Steckzapfen ist dazu bestimmt, bei der Montage des Möbelgriffs in die zentrische Durchgangsbohrung 3 des bereits in der Bohrung 6 aufgenommenen Hohldübels 2 eingesteckt und darin gehalten zu werden. Hierzu ist der Hohldübel 2 an seinem vorderen, d. h. in die Bohrung 6 hineinragenden Ende mit Längsschlitzen 10 versehen. In ihrem so geschlitzten Bereich verjüngt sich die Durchgangsbohrung 3 zu einem nach innen vorspringenden Stützbund 11.

Der Steckzapfen 8 weist an seinem freien Ende einen Zapfenkopf 12 auf, der eine rückwärtige ringförmige Widerlagerfläche 13 bildet. Der am Zapfenende abgerundete Zapfenkopf 12 weitet beim Einführen des Steckzapfens 8 den geschlitzten Endbereich des Hohldübels auf, bis der Zapfenkopf 12 durch den sich aufweitenden Stützbund 11 hindurchgetreten ist. Sodann federt der Stützbund 11 in eine Umfangsnut 14 hinter den Zapfenkopf 12 ein und stützt sich formschlüssig an der rückwärtigen ringförmigen Widerlagerfläche 13 des Zapfenkopfs 12 ab. Eine stirnseitige Stützfläche 15 des Stützbundes 10 liegt im montierten Zustand mindestens teilweise flächig an der ringförmigen Widerlagerfläche 13 des Zapfenkopfes 12. Die Widerlagerfläche 13 des Steckzapfens 8 bildet eine Mantelfläche eines sich zum Zapfenkopf 12 hin erweiternden Kegelstumpfes mit einem Kegelwinkel von 90° - 170°. Vorzugsweise liegt der Kegelwinkel der Widerlagerfläche 13 zwischen 130° und 170°.

Die Durchgangsbohrung 3 weist in ihrem ungeschlitzten, sich über den größten Teil der Länge des Hohldübels 2 erstreckenden Bereichs eine durchgehend gleichbleibende Innenkontur auf, bevor sie sich im geschlitzten vorderen Bereich zum Stützbund 11 hin verjüngt. Der Steckzapfen 8 bildet in seinem mittleren Bereich einen Sechskant.

Beim Einstecken des Steckzapfens 8 in den Hohldübel 2 muss nur die verhältnismäßig geringe Kraft aufgebracht werden, die dazu erforderlich ist, den Stützbund 11 aufzuweiten, damit der Zapfenkopf 12 hindurchtreten kann. Der Steckzapfen 8 könnte aber nur dann aus dem Möbelstück 2 herausgezogen werden, wenn eine hohe Auszugskraft aufgewendet wird.

## Patentansprüche

1. Steckverbindung zur Befestigung eines Möbelgriffs od. dgl. an einem Möbelteil (1), mit einem in einer Bohrung (6) des Möbelteils (1) aufnehmbaren Hohldübel (2), der an seiner Außenseite zum Eingriff an der Bohrungswand bestimmte Haltezähne (4) sowie eine zentrische Durchgangsbohrung (3) aufweist, in die ein mit dem Möbelgriff od. dgl. verbundener Steckzapfen (8) einführbar und einrastbar ist, wobei der Hohldübel (2) an seinem vorderen Ende Längsschlitze (10) und einen nach innen vorspringenden Stützbund (11) aufweist, der in montiertem Zustand der Steckverbindung in eine Umfangsnut (14) des Steckzapfens (8) einfedert und sich mit seiner stirnseitigen Stützfläche (15) formschlüssig an einer rückwärtigen ringförmigen Widerlagerfläche (13) eines das freie Ende des Steckzapfens (8) bildenden Zapfenkopfes (12) abstützt, **dadurch gekennzeichnet, dass** die Widerlagerfläche (13) des Zapfenkopfes (12) des Steckzapfens (8) eine Mantelfläche eines sich zum Zapfenkopf (12) hin erweiternden Kegelstumpfes mit einem Kegelwinkel von 90° - 170° bildet.

2. Steckverbindung nach Anspruch 1, **dadurch gekennzeichnet, dass** der Kegelwinkel der Widerlagerfläche (13) 130° - 170° beträgt.

3. Steckverbindung nach Anspruch 1, **dadurch gekennzeichnet, dass** die stirnseitige Stützfläche (15) des Hohldübels (2) in montiertem Zustand mindestens teilweise flächig an der ringförmigen Widerlagerfläche (13) des Zapfenkopfes (12) anliegt.

4. Steckverbindung nach Anspruch 1, **dadurch gekennzeichnet, dass** die Durchgangsbohrung (3) in ihrem ungeschlitzten Bereich eine durchgehend gleichbleibende Innenkontur aufweist und sich im geschlitzten Bereich zum Stützbund (11) hin verjüngt.

5. Steckverbindung nach Anspruch 1, **dadurch gekennzeichnet, dass** der Zapfenkopf (12) am Zapfenende abgerundet ist.

## Claims

1. Plug-in connection for fastening a furniture handle or the like on a furniture part (1), having a hollow connector (2) which can be accommodated in a bore (6) of the furniture part (1) and has, on its outside, retaining teeth (4), which are intended for engaging on the wall of the bore, as well as a central through-passage bore (3) into which a plug-in peg (8), which is connected to the furniture handle or the like, can be introduced and latched, it being the case that the hollow connector (2), at its front end, has longitudinal slots (10) and an inwardly projecting supporting collar (11), which in the assembled state of the plug-in connection is deflected resiliently into a circumferential groove (14) of the plug-in peg (8), and is supported in a form-fitting manner, by way of its end-side supporting surface (15), on a rear annular abutment surface (13) of a peg head (12), which forms the free end of the plug-in peg (8), **characterized in that** the abutment surface (13) of the head (12) of the plug-in peg (8) forms a lateral surface of a truncated cone which widens in the direction of the peg head (12) and has a cone angle of 90° - 170°.

2. Plug-in connection according to Claim 1,
**characterized in that** the cone angle of the abutment surface (13) is 130° - 170°.

3. Plug-in connection according to Claim 1,
**characterized in that**, in the assembled state, the end-side supporting surface (15) of the hollow connector (2) butts with at least partial surface contact against the annular abutment surface (13) of the peg head (12).

4. Plug-in connection according to Claim 1,
**characterized in that** the through-passage bore (3), in its slot-free region, has a continuously uniform internal contour and, in the slotted region, tapers in the direction of the supporting collar (11).

5. Plug-in connection according to Claim 1,
**characterized in that** the peg head (12) is rounded at the end of the peg.

## Revendications

1. Connecteur enfichable pour la fixation d'une poignée de meuble ou similaire à une partie de meuble (1), comprenant une cheville creuse (2) pouvant être logée dans un alésage (6) de la partie de meuble (1), qui présente sur son côté extérieur, des dents de retenue (4) prévues pour s'engager avec la paroi de l'alésage, ainsi qu'un alésage traversant central (3), dans lequel un tourillon d'enfichage (8) connecté à la poignée de meuble ou similaire peut être enfoncé et encliqueté, la cheville creuse (2) présentant à son extrémité avant des fentes longitudinales (10) et un épaulement de support (11) saillant vers l'intérieur, qui, dans l'état monté du connecteur enfichable, s'insère par compression élastique dans une rainure périphérique (14) du tourillon d'enfichage (8) et s'appuie avec sa face de support (15) du côté frontal par engagement positif contre une surface de butée arrière (13) de forme annulaire d'une tête de tourillon (12) formant l'extrémité libre du tourillon d'enfichage (8), **caractérisé en ce que** la surface de butée (13) de la tête de tourillon (12) du tourillon d'enfichage (8) forme une surface d'enveloppe d'un tronc de cône s'élargissant vers la tête de tourillon (12) avec un angle de conicité de 90° à 170°.

2. Connecteur enfichable selon la revendication 1, **caractérisé en ce que** l'angle de conicité de la surface de butée (13) est de 130° à 170°.

3. Connecteur enfichable selon la revendication 1, **caractérisé en ce que** la surface de support (15) du côté frontal de la cheville creuse (2) s'applique dans l'état monté au moins partiellement à plat sur la surface de butée (13) de forme annulaire de la tête de tourillon (12).

4. Connecteur enfichable selon la revendication 1, **caractérisé en ce que** l'alésage traversant (3) présente dans sa région non fendue un contour intérieur uniforme continu et se rétrécit jusqu'à l'épaulement de support (11) dans la région fendue.

5. Connecteur enfichable selon la revendication 1, **caractérisé en ce que** la tête de tourillon (12) est arrondie à l'extrémité de tourillon.
